(19)

Europäisches Patentamt
European Patent Office
Office européen des brevets

(11) **EP 4 332 537 A1**

(12) **EUROPEAN PATENT APPLICATION**
published in accordance with Art. 153(4) EPC

(43) Date of publication:
**06.03.2024 Bulletin 2024/10**

(21) Application number: **22837364.3**

(22) Date of filing: **01.06.2022**

(51) International Patent Classification (IPC):
**G01M 17/02** *(2006.01)*    **B60C 11/24** *(2006.01)*
**B60C 19/00** *(2006.01)*

(52) Cooperative Patent Classification (CPC):
**B60C 11/24; B60C 19/00; G01M 17/02**

(86) International application number:
**PCT/JP2022/022378**

(87) International publication number:
**WO 2023/281943 (12.01.2023 Gazette 2023/02)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **06.07.2021  JP 2021112415**

(71) Applicant: **BRIDGESTONE CORPORATION**
**Chuo-ku**
**Tokyo 104-8340 (JP)**

(72) Inventor: **KATSUNO, Hiroyuki**
**Tokyo 104-8340 (JP)**

(74) Representative: **Marks & Clerk LLP**
**15 Fetter Lane**
**London EC4A 1BW (GB)**

(54) **TIRE MANAGEMENT DEVICE, PROGRAM, AND TIRE MANAGEMENT METHOD**

(57)    A tire management apparatus (10) is a tire management apparatus for managing a tire mounted on a vehicle, including: a data acquisition unit (131) configured to acquire travel data including data concerning speed of the vehicle; a wear condition calculation unit (132) configured to calculate a wear condition of the tire based on the travel data acquired; and a wear condition correction unit (133) configured to correct the wear condition calculated, in order to reduce wear, upon determining that the vehicle is traveling at a defined speed or greater based on the data concerning speed.

*FIG. 1*

EP 4 332 537 A1

**Description**

TECHNICAL FIELD

The present disclosure relates to a tire management apparatus, a program, and a tire management method.

BACKGROUND

Conventional systems are known to acquire data on a vehicle in motion and estimate impact on a tire. For example, Patent Literature (PTL) 1 describes a system that calculates wear energy according to driving modes in each section of a route and predicts the total tire wear.

CITATION LIST

Patent Literature

PTL 1: JP 2017-156295 A

SUMMARY

(Technical Problem)

According to conventional technologies such as in PTL 1, there were sometimes discrepancies between the wear prediction results and the actual amount of wear. Therefore, there was a need for a technology that could calculate a wear condition of a tire with even greater precision.
In view of such circumstances, it would be helpful to provide a tire management apparatus, a program, and a tire management method capable of accurately calculating the wear condition of a tire.

(Solution to Problem)

A tire management apparatus according to an embodiment of the present disclosure is a tire management apparatus for managing a tire mounted on a vehicle, comprising: a data acquisition unit configured to acquire travel data including data concerning speed of the vehicle; a wear condition calculation unit configured to calculate a wear condition of the tire based on the travel data acquired; and a wear condition correction unit configured to correct the wear condition calculated, in order to reduce wear, upon determining that the vehicle is traveling at a defined speed or greater based on the data concerning speed.
A program according to an embodiment of the present disclosure causes a tire management apparatus for managing a tire mounted on a vehicle to execute: acquiring travel data including data concerning speed of the vehicle; calculating a wear condition of the tire based on the travel data acquired; and correcting the wear condition calculated, in order to reduce wear, upon determining that the vehicle is traveling at a defined speed or greater based on the data concerning speed.
A tire management method according to an embodiment of the present disclosure is a tire management method executed by a tire management apparatus for managing a tire mounted on a vehicle, comprising: acquiring travel data including data concerning speed of the vehicle; calculating a wear condition of the tire based on the travel data acquired; and correcting the wear condition calculated, in order to reduce wear, upon determining that the vehicle is traveling at a defined speed or greater based on the data concerning speed.

(Advantageous Effect)

According to the present disclosure, a tire management apparatus, a program, and a tire management method capable of accurately calculating the wear condition of a tire is provided.

BRIEF DESCRIPTION OF THE DRAWINGS

In the accompanying drawings:

FIG. 1 illustrates an example configuration of a tire management apparatus according to an embodiment of the present disclosure;

FIG. 2 illustrates an example configuration of a tire management system including the tire management apparatus of FIG. 1;

FIG. 3 illustrates a relationship between wear energy and vehicle speed;

FIG. 4 illustrates a relationship between wear energy and amount of wear; and

FIG. 5 is a flowchart illustrating an example of a tire management method according to an embodiment of the present disclosure.

DETAILED DESCRIPTION

The following describes a tire management apparatus and a tire management method according to an embodiment of the present disclosure, with reference to the drawings. In each drawing, identical or equivalent parts are marked with the same reference sign. In description of the present embodiment, description of identical or equivalent parts is omitted or simplified as appropriate.

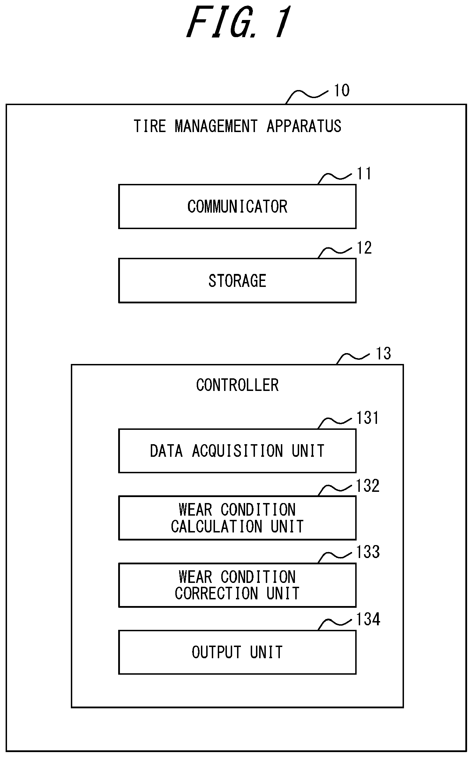

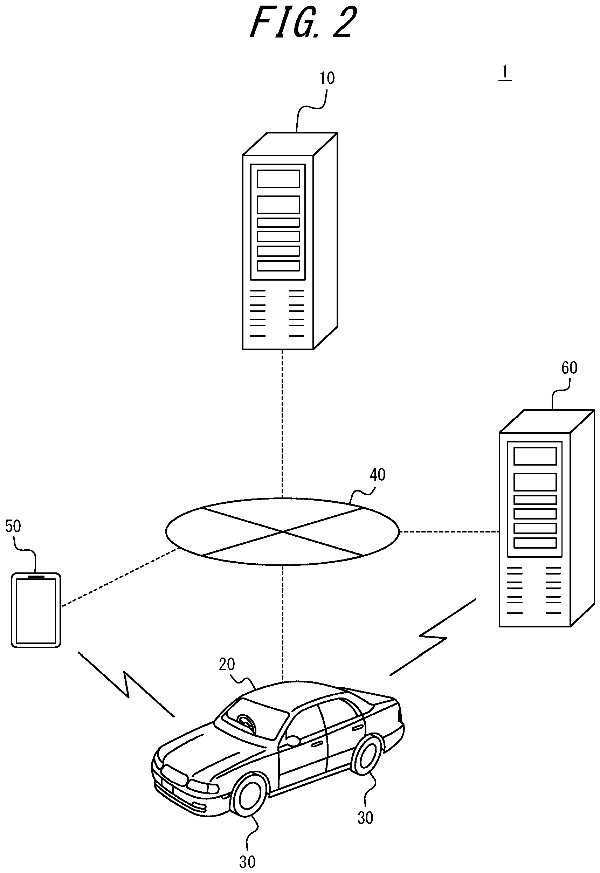

FIG. 1 illustrates an example configuration of a tire management apparatus 10 according to the present embodiment. FIG. 2 illustrates an example configuration of a tire management system 1 including the tire management apparatus 10 of FIG. 1. The tire management apparatus 10 is an apparatus that manages a tire 30 mounted on a vehicle 20. The tire management apparatus 10 is able to calculate and present a wear condition (amount of wear as an example) to a user as management of the condition of the tire 30. Here, the user is the user of the tire management apparatus 10 or the tire management system 1, but in particular includes a driver of the vehicle 20.

The tire management apparatus 10 includes a communicator 11, a storage 12, and a controller 13. The controller 13 includes a data acquisition unit 131, a wear condition calculation unit 132, a wear condition correction unit 133, and an output unit 134. The tire management apparatus 10 may be a computer, such as a server, as a hardware structure. Details of components of the tire management apparatus 10 are described below.

The tire management apparatus 10 together with at least one of a terminal device 50 or a server 60 connected by the network 40 may constitute the tire management system 1. The network 40 is, for example, the Internet, but may be a local area network (LAN).

The terminal device 50 is a general-purpose mobile terminal such as, but not limited to, a smartphone, a tablet device, or the like. The terminal device 50 is carried by the user. The terminal device 50 may acquire travel data of the vehicle 20 and transmit the travel data to the tire management apparatus 10 via the network 40. Further, the terminal device 50 may function as a display device to acquire information such as the wear condition from the tire management apparatus 10 via the network 40 and display the information to the user. When the vehicle 20 is equipped with a device that has a communication function, the terminal device 50 may acquire travel data through wireless communication with the device.

The server 60 is a separate computer from the tire management apparatus 10, for example. The server 60 may be located at an inspection facility for the vehicle 20, for example. The server 60 may acquire the travel data of the vehicle 20 and transmit the travel data to the tire management apparatus 10 via the network 40. Further, the server 60 may acquire information such as the wear condition from the tire management apparatus 10 via the network 40 and display the information on a display device such as a display connected to the server 60. When the vehicle 20 is equipped with a device that has a communication function, the server 60 may acquire the travel data through wireless communication with the device.

Further, a device installed in the vehicle 20 may be directly connected to the network 40 and transmit the travel data to the tire management apparatus 10. Further, the device installed in the vehicle 20 may include a display. The device installed in the vehicle 20 may acquire information such as the wear condition from the tire management apparatus 10 via the network 40 and display the information on the display. The device installed in the vehicle 20 may be, but is not particularly limited to, a driver assistance device with wireless communication capability, for example.

The tire management system 1 is not limited to the configuration illustrated in FIG. 2. For example, the tire management system 1 may be configured without the server 60. For example, the tire management system 1 may be configured as a device installed in the vehicle 20 and configured to transmit the travel data to the tire management apparatus 10 via the network 40, and the terminal device 50 configured to display information such as the wear condition from the tire management apparatus 10 to the user via the network 40.

The following is a detailed description of components of the tire management apparatus 10. The communicator 11 is configured as one or more communication modules configured to connect to the network 40. The communicator 11 may include, for example, a communication module compatible with a mobile communication standard such as 4G (fourth generation) or 5G (fifth generation). The communicator 11 may include, for example, a communication module compatible with a wired LAN standard (1000 BASE-T as an example). The communicator 11 may include, for example, a communication module compatible with a wireless LAN standard (IEEE 802.11 as an example).

The storage 12 includes at least one memory. The memory may be any memory, including but not limited to semiconductor memory, magnetic memory, or optical memory, for example. The storage 12 may be built into the tire management apparatus 10, for example, but may be configured to be accessed externally from the tire management apparatus 10 via any interface.

The storage 12 stores varied data used in various calculations performed by the controller 13. Further, the storage 12 may store results and intermediate data of various calculations executed by the controller 13.

According to the present embodiment, the storage 12 stores a function (numerical model) used in calculation of the wear condition of the tire 30 by the wear condition calculation unit 132 and the like. Details of the numerical model are described below.

The controller 13 is at least one processor. The processor may be, but is not limited to, a general-purpose processor or a dedicated processor specialized for particular processing, and may be any processor. The controller 13 controls overall operation of the tire management apparatus 10.

Here, the tire management apparatus 10 may have the following software configuration. At least one program used to control operation of the tire management apparatus 10 is stored in the storage 12. The program stored in the storage 12, when read by the processor of the controller 13, causes the controller 13 to function as the data acquisition unit 131, the wear condition calculation unit 132, the wear condition correction unit 133 and the output unit 134.

The data acquisition unit 131 acquires the travel data of the vehicle 20. The travel data includes at least data concerning speed of the vehicle 20. The data concerning speed of the vehicle 20 may be data that directly indicates speed of the vehicle 20 (hereinafter also referred to as "direct data") or data that indirectly indicates speed of the vehicle 20 (hereinafter also referred to as "indirect data").

The direct data may be, for example, speed data of the vehicle 20 as measured by a speed sensor provided to the vehicle 20. The speed data of the vehicle 20 may be acquired, for example, from an electronic control unit (ECU) of the vehicle 20 via an in-vehicle network such as a controller area network (CAN), or via a device with a communication function installed in the vehicle 20 and the network 40. The data acquisition unit 131 may acquire the speed data as time series data, for example.

The indirect data may be, for example, position data of the vehicle 20 specified by the Global Positioning System (GPS) function of a device installed in the vehicle 20. For example, when the position data determines that the vehicle 20 is at a location with a speed limit (a highway as an example), the vehicle 20 may be estimated to be traveling at a speed within the speed limit. Further, the data acquisition unit 131 may acquire the position data as time series data, for example. An estimated travel speed of the vehicle 20 may be verified by calculating the speed of the vehicle 20 from travel time and distance traveled by the vehicle 20 as indicated by the position data.

Here, according to the present embodiment, the data concerning speed of the vehicle 20 includes the speed data and the position data. Further, the speed data includes information not only on a speed component to the front side of the vehicle 20 (forward) and a speed component to opposite the front side of the vehicle 20 (backward), but also on a speed component in sideways directions of the vehicle 20. The speed of the vehicle 20 may be measured by a two or more dimensional speed sensor so that a forward or backward speed component and a sideways speed component may be measured simultaneously. The measurement of the speed of the vehicle 20 may be made every second, as an example, but is not particularly limited.

Further, according to the present embodiment, the travel data further includes data concerning the environment in which the vehicle 20 is traveling. The data concerning the environment may include, for example, temperature of the location where the vehicle 20 is traveling, weather information including the presence or absence of rainfall, and the like. The data concerning the environment may be, for example, detection data detected by a temperature sensor provided to the vehicle 20, or information acquired by a device installed in the vehicle 20 via the network 40. The travel data may further include other information indicating a condition of travel of the vehicle 20. The travel data may include, for example, acceleration data of the vehicle 20. The acceleration data may be measured, for example, by an accelerometer provided to the vehicle 20.

The travel data acquired by the data acquisition unit 131 may be associated with the vehicle 20 or the driver of the vehicle 20 and stored in the storage 12. Further, the tire management apparatus 10 may periodically calculate the wear condition. In this case, the data acquisition unit 131 may periodically acquire travel data.

The wear condition calculation unit 132 calculates the wear condition of the tire 30 based on the travel data acquired. According to the present embodiment, the wear condition calculation unit 132 calculates an amount of wear as the wear condition of the tire 30. The wear condition of the tire 30 is not limited to the amount of wear, and may be, as other examples, a wear rate, a travelable distance to the end of wear life, expected wear life TI, which is described below, and the like. However, when the wear condition is the travelable distance to the end of wear life and the expected wear life TI described below, the correction described below is made so that the travelable distance and the expected wear life TI become greater values.

Here, the wear of the tire 30 is conventionally known to be affected by forces applied to the tire 30 by the travel of the vehicle 20. For example, the amount of wear of the tire 30 may be calculated based on wear energy Ew (friction energy) described in JP H11-326143 A. The wear energy Ew is a parameter that indicates how easily the tire 30 wears out. The higher the wear energy Ew, the greater the amount of wear and the shorter the wear life of the tire 30.

According to the present embodiment, the wear condition calculation unit 132 calculates the wear energy Ew based on the travel data. The wear energy Ew is expressed by the following Equation (1). Further, the wear energy Ew may be used to calculate the expected wear life TI of the tire 30, which is expressed by the following Equation (2). For example, when the wear condition calculation unit 132 calculates the travelable distance to the end of the wear life of the tire 30 as wear information, the travelable distance may be estimated by multiplying the expected wear life TI by a factor determined by the type of the tire 30.

$$Ew = Ewf + Ewa + Ews + Ewd + Ewb \qquad ...Equation\ (1)$$

$$TI = (Gl/Ew) \times (NSD - 1.6) \qquad ...Equation\ (2)$$

In Equation (1), Ewf is a wear energy component of the tire 30 during free rolling. Ewa is a wear energy component of the tire 30 with toe angle applied. Ews is a wear energy component of the tire with sideways force (transverse force) applied. Ewd is a wear energy component of the tire with driving force applied. Ewb is a wear energy component of the tire with braking force applied. Further, in equation (2), Gl is a wear resistance index, which is an index of antiwear performance of the topmost rubber in the tire 30. NSD is groove depth (mm) of the tire 30. The " 1.6" corresponds to a remaining groove of 1.6 (mm), which is considered to be a limit at which the tire 30 is to be disposed of.

Ews, Ewd, and Ewb in Equation (1) are wear energy components due to sideways force, driving force, and braking force, and therefore vary with the state of travel of the vehicle 20. The sideways force, driving force, and braking force are determined based on the sideways, forward, and backward acceleration of the vehicle 20. When the travel data includes acceleration data, the wear condition calculation unit 132 may acquire the sideways, forward, and backward acceleration of the vehicle 20 from the acceleration data. The wear condition calculation unit 132 may acquire the sideways, forward, and backward acceleration of the vehicle 20 by executing differential calculations of speed when the speed data is obtainable, as is the case according to the present embodiment. Thus, the wear condition calculation unit 132 is able to calculate the wear energy Ew based on the travel data.

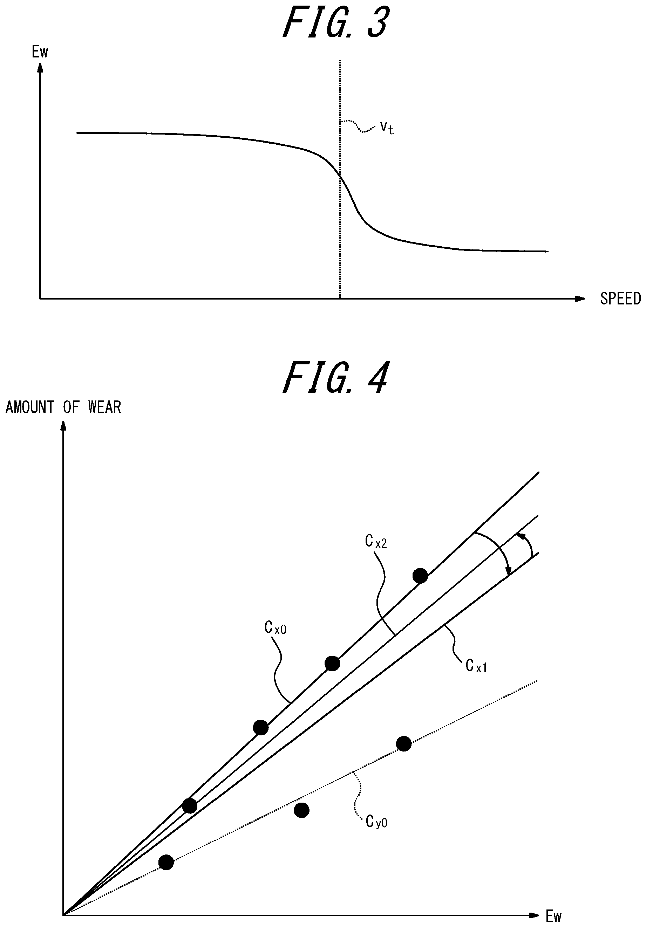

The wear condition calculation unit 132 reads an appropriate function from the storage 12 according to the type of the tire 30. According to the present embodiment, the function is a numerical model indicating a relationship between the wear energy Ew and the amount of wear, as illustrated in FIG. 4. The example in FIG. 4 indicates $C_{x0}$ and $C_{y0}$, which are numerical models for calculating the amount of wear for each of two types of the tire 30. $C_{x0}$ and $C_{y0}$ may be determined based on past measured data, for example. The wear condition calculation unit 132 calculates the amount of wear (before correction) of the tire 30 by, for example, reading $C_{x0}$ in FIG. 4 and inputting the calculated wear energy Ew.

The inventor has investigated ways to further improve accuracy in calculating the amount of wear, and has found that when the vehicle 20 travels at high speed, the actual amount of wear is smaller than the amount of wear of the tire 30 predicted by conventional technology. In other words, as illustrated in FIG. 3, the wear energy Ew was found to decrease significantly when the vehicle 20 travels at a stable defined speed vt or greater. Here, the defined speed vt was 50 km/h, as an example. This decrease in the wear energy Ew is thought to be due to the following: when the vehicle 20 continues to travel at a high speed of the defined speed vt or greater, internal pressure of the tire 30 increases and ground contact area changes so that a distribution of ground contact pressure becomes more uniform.

In order to reflect the above decrease in the wear energy Ew in the calculation of the amount of wear, the wear condition correction unit 133 executes a correction upon determining that the vehicle 20 is traveling at the defined speed vt or greater, based on the data concerning speed. The correction is made so that the amount of wear of the tire 30 calculated by the wear condition calculation unit 132 (the amount of wear before correction) becomes smaller. In the example in FIG. 4, when the amount of wear before correction is calculated using $C_{x0}$, the wear condition correction unit 133 may correct to the amount of wear indicated by $C_{x1}$. When the wear energy Ew and the wear condition (amount of wear) of the tire 30 have a linear relationship as illustrated in FIG. 4, the wear condition correction unit 133 may correct the value before correction by multiplying by a correction factor. The correction factor is less than 1, and for example may multiply the value before correction by 0.5 to 0.9.

According to the present embodiment, as described above, the data concerning speed includes the speed data and the position data of the vehicle 20. The wear condition correction unit 133 uses the speed data and the position data to determine that the vehicle 20 is traveling at the defined speed vt or greater under the following conditions. First, based on the speed data, the wear condition correction unit 133 executes correction when the speed of the vehicle 20 is the defined speed vt or greater for a certain period of time or more. Here, the condition of "a certain period of time or more" is provided to exclude correction for a case where the vehicle 20 momentarily reaches or exceeds the defined speed vt. The case of momentary speed increase can be excluded, and therefore the effect of vehicle speed on tire wear can be appropriately reflected in the calculation of the wear condition of the tire 30. The certain period of time may be set, for example, to a time sufficient for the internal pressure of the tire 30 to increase to a value more than normal due to travel at the defined speed vt or greater. The certain period of time may be 20 min as an example, but is not limited to this. As another example, the wear condition correction unit 133 may execute the correction in all cases where the vehicle 20 is traveling at the defined speed vt or greater, without the condition of "a certain period of time or more".

Based on the position data, the wear condition correction unit 133 executes correction when the position of the vehicle 20 is at a location with a speed limit of the defined speed vt or greater. The defined speed vt is 50 km/h, for example. The defined speed vt, which is a threshold for correction, is preferably 50 km/h or greater. A location with a speed limit of the defined speed vt or greater is a highway, for example. The case of momentary speed increase can be excluded, and therefore the effect of vehicle speed on tire wear can be appropriately reflected in the calculation of the wear condition of the tire 30. The wear condition correction unit 133 may execute correction to reduce the amount of wear of the tire 30 when the vehicle 20 is determined to be traveling on a highway based on the position data. Here, the wear condition correction unit 133 executes correction upon determining that the vehicle 20 is traveling at the defined speed vt or greater based on at least one of the speed data or the position data. As another example, the wear condition correction unit 133 may preferentially use one of the speed data and the position data to make the determination. For example, the wear condition correction unit 133 may make the determination based on the speed data upon determining that the vehicle 20 is not traveling at the defined speed vt or greater based on the position data.

As described above, the travel data may include data concerning the environment in which the vehicle 20 is traveling. The wear condition correction unit 133 may adjust the correction factor used in the correction based on the data concerning the environment. In the example in FIG. 4, when the amount of wear before correction is calculated using $C_{x0}$ and the amount of wear without adjustment based on the data concerning the environment is indicated by $C_{x1}$, the wear condition correction unit 133 may adjust the amount of wear to be indicated by $C_{x2}$. When the wear energy Ew and the wear condition (amount of wear) of the tire 30 have a linear relationship as illustrated in FIG. 4, the wear condition correction unit 133 corrects the value before correction by multiplying by the correction factor, but the value of the correction factor may be adjusted based on the data concerning the environment.

The wear condition correction unit 133 may, for example, adjust the correction factor so that the correction amount is smaller when rainfall is determined to be present based on the data concerning the environment. The presence of rainfall is thought to reduce the increase in the internal pressure of the tire 30 due to high-speed driving compared to fair weather. So, for example, when the value of the correction factor before adjustment is 0.8 (that is, the amount of wear before correction is multiplied by 0.8), the wear condition correction unit 133 may adjust the value of the correction factor to 0.9.

Thus, the wear condition correction unit 133 is able to reflect the decrease in the wear energy Ew as illustrated in FIG. 3 by making a correction so that the amount of wear of the tire 30 becomes smaller upon determining that the vehicle 20 is traveling at the defined speed vt or greater. Further, the wear condition correction unit 133 may adjust the correction amount according to the environment in which the vehicle 20 is traveling. Therefore, accuracy of the amount of wear may be improved.

The output unit 134 outputs the amount of wear calculated by the wear condition calculation unit 132 to a display device or the like. When the correction is executed by the wear condition correction unit 133, the output unit 134 outputs the amount of wear after correction to a display device or the like. As described above, a display or the like of the terminal device 50 and the server 60 may function as a display device that displays the amount of wear to the user. For example, information about the wear condition (according to the present embodiment, the amount of wear) as well as the wear condition may be displayed on a screen of the terminal device 50. Information about the wear condition is information for managing the tire 30 based on the wear condition, and may be, for example, advice on replacing the tire 30. For example, when the amount of wear is high, a suggestion to change to a more wear-resistant tire 30 may be displayed. The information about the wear condition may be stored, for example, as fixed phrases in the storage 12, and may be selected by the output unit 134. Further, when the wear condition is displayed on a display or the like at an inspection facility, a time to replace the tire 30 on the vehicle 20 may be determined based on the information.

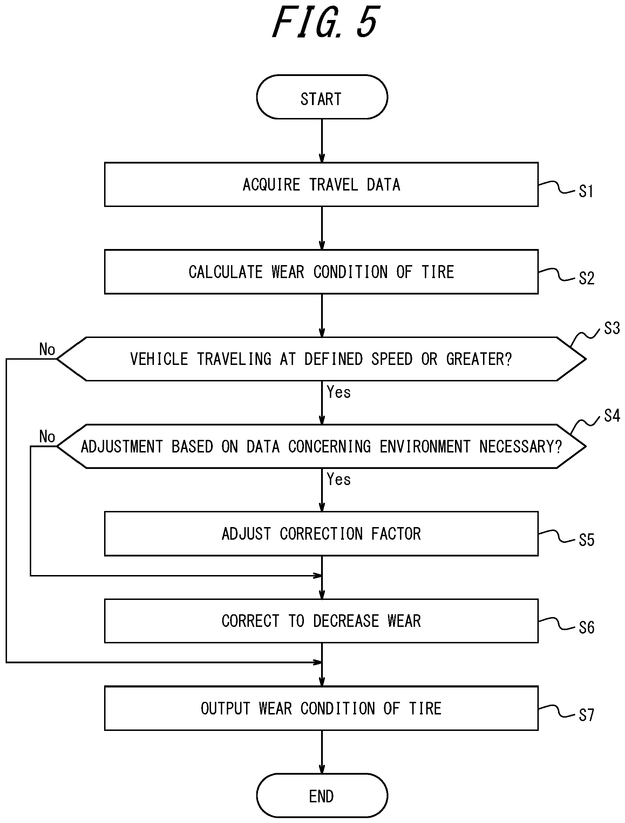

FIG. 5 is a flowchart illustrating a tire management method executed by the tire management apparatus 10 according to the present embodiment.

The data acquisition unit 131 acquires the travel data, including the data concerning speed of the vehicle 20 (step S1).

The wear condition calculation unit 132 calculates the wear condition of the tire 30 based on the travel data acquired (step S2).

When the wear condition correction unit 133 determines that the vehicle 20 is traveling at the defined speed or greater based on the data concerning speed (Yes in step S3), processing proceeds to step S4 to execute the correction processing. When the wear condition correction unit 133 determines that the vehicle 20 is not traveling at the defined speed or greater (No in step S3), correction is not executed and processing proceeds to step S7.

The wear condition correction unit 133 adjusts the correction factor (step S5) when an adjustment based on the data concerning the environment is necessary (Yes in step S4), such as when rainfall is present. The wear condition correction unit 133 does not adjust the correction factor when no adjustment based on the data concerning the environment is necessary (No in step S4). Then, the wear condition correction unit 133 corrects the wear condition calculated by the wear condition calculation unit 132 so that wear becomes smaller (step S6).

The output unit 134 outputs the wear condition of the tire 30 calculated by the wear condition calculation unit 132 or corrected by the wear condition correction unit 133 to a display device or the like (step S7). As above, information about the wear condition may be displayed along with the wear condition.

As described above, the tire management apparatus 10 and the tire management method according to the present embodiment are able to accurately calculate the wear condition of the tire 30 through the configuration described above. Further, by indicating the wear condition of the tire 30 with a high degree of accuracy, appropriate management may be carried out, such as replacing the tire 30 at the appropriate time.

Although an embodiment of the present disclosure has been described based on the drawings and examples, it should be noted that a person skilled in the art may make variations and modifications based on the present disclosure. Therefore, it should be noted that such variations and modifications are included within the scope of the present disclosure. For example, functions and the like included in each component and step may be rearranged, and multiple components and steps may be combined into one or divided, as long as no logical inconsistency results. The embodiment according to the present disclosure may be realized as a program executed by a processor provided to a device or as a storage medium on which the program is stored. The scope of the present disclosure should be understood to include these examples.

According to the embodiment described above, the wear condition calculation unit 132 calculates the wear condition of the tire 30 using the wear energy Ew, but a parameter other than the wear energy Ew may be used. The wear condition calculation unit 132 may calculate the wear condition of the tire 30 using a model generated by machine learning.

The correction factor is not limited to one that applies the slope of a linear relationship as in the embodiment described above. The wear condition correction unit 133 may adjust an additional correction amount instead of the correction factor, based on the data concerning the environment. The additional correction amount may, for example, be added to or subtracted from the corrected value of the wear condition calculated by the wear condition calculation unit 132.

Further, the configuration of the tire management apparatus 10 may be any configuration. For example, a process performed by the tire management apparatus 10, which is one computer according to the embodiment described above, may be performed by distributed processing of multiple computers. For example, the server 60 in the tire management system 1 may perform some of the processing of the tire management apparatus 10 (for example, the processing of the data acquisition unit 131).

REFERENCE SIGNS LIST

| 1 | tire management system |
|---|---|
| 10 | tire management apparatus |
| 11 | communicator |
| 12 | storage |
| 13 | controller |
| 20 | vehicle |
| 30 | tire |
| 40 | network |
| 50 | terminal device |
| 60 | server |
| 131 | data acquisition unit |
| 132 | wear condition calculation unit |
| 133 | wear condition correction unit |
| 134 | output unit |

**Claims**

1. A tire management apparatus for managing a tire mounted on a vehicle, comprising:

  a data acquisition unit configured to acquire travel data including data concerning speed of the vehicle;
  a wear condition calculation unit configured to calculate a wear condition of the tire based on the travel data acquired; and

a wear condition correction unit configured to correct the wear condition calculated, in order to reduce wear, upon determining that the vehicle is traveling at a defined speed or greater based on the data concerning speed.

2. The tire management apparatus according to claim 1, wherein

the data concerning speed includes speed data of the vehicle, and
the wear condition correction unit executes the correction when speed of the vehicle is the defined speed or greater for a certain period of time or more, based on the speed data.

3. The tire management apparatus according to claim 1 or 2, wherein

the data concerning speed includes position data of the vehicle, and
the wear condition correction unit executes the correction when position of the vehicle is at a location with a speed limit of the defined speed or greater, based on the position data.

4. The tire management apparatus according to any one of claims 1 to 3, wherein

the travel data includes data concerning the environment in which the vehicle is traveling, and
the wear condition correction unit adjusts a correction factor used in the correction, based on the data concerning the environment.

5. The tire management apparatus according to any one of claims 1 to 4, wherein the defined speed is 50 km/h or greater.

6. A program that causes a tire management apparatus for managing a tire mounted on a vehicle to execute:

acquiring travel data including data concerning speed of the vehicle;
calculating a wear condition of the tire based on the travel data acquired; and
correcting the wear condition calculated, in order to reduce wear, upon determining that the vehicle is traveling at a defined speed or greater based on the data concerning speed.

7. A tire management method executed by a tire management apparatus for managing a tire mounted on a vehicle, comprising:

acquiring travel data including data concerning speed of the vehicle;
calculating a wear condition of the tire based on the travel data acquired; and
correcting the wear condition calculated, in order to reduce wear, upon determining that the vehicle is traveling at a defined speed or greater based on the data concerning speed.

# FIG. 1

TIRE MANAGEMENT APPARATUS — 10

COMMUNICATOR — 11

STORAGE — 12

CONTROLLER — 13

DATA ACQUISITION UNIT — 131

WEAR CONDITION CALCULATION UNIT — 132

WEAR CONDITION CORRECTION UNIT — 133

OUTPUT UNIT — 134

# FIG. 2

## FIG. 3

## FIG. 4

# FIG. 5

```
                        ┌─────────────┐
                        │    START    │
                        └─────────────┘
                               │
                               ▼
        ┌──────────────────────────────────────────────┐
        │             ACQUIRE TRAVEL DATA               │ ── S1
        └──────────────────────────────────────────────┘
                               │
                               ▼
        ┌──────────────────────────────────────────────┐
        │          CALCULATE WEAR CONDITION OF TIRE     │ ── S2
        └──────────────────────────────────────────────┘
                               │
                               ▼
   No  ◁──────────────────────────────────────────────────▷ S3
        VEHICLE TRAVELING AT DEFINED SPEED OR GREATER?
                               │ Yes
                               ▼
   No  ◁──────────────────────────────────────────────────▷ S4
        ADJUSTMENT BASED ON DATA CONCERNING ENVIRONMENT NECESSARY?
                               │ Yes
                               ▼
        ┌──────────────────────────────────────────────┐
        │             ADJUST CORRECTION FACTOR          │ ── S5
        └──────────────────────────────────────────────┘
                               │
                               ▼
        ┌──────────────────────────────────────────────┐
        │             CORRECT TO DECREASE WEAR          │ ── S6
        └──────────────────────────────────────────────┘
                               │
                               ▼
        ┌──────────────────────────────────────────────┐
        │           OUTPUT WEAR CONDITION OF TIRE       │ ── S7
        └──────────────────────────────────────────────┘
                               │
                               ▼
                        ┌─────────────┐
                        │     END     │
                        └─────────────┘
```

## INTERNATIONAL SEARCH REPORT

International application No.

**PCT/JP2022/022378**

### A.    CLASSIFICATION OF SUBJECT MATTER

**G01M 17/02**(2006.01)i; **B60C 11/24**(2006.01)i; **B60C 19/00**(2006.01)i
FI:    G01M17/02; B60C19/00 J; B60C11/24 Z

According to International Patent Classification (IPC) or to both national classification and IPC

### B.    FIELDS SEARCHED

Minimum documentation searched (classification system followed by classification symbols)

G01M17/02; B60C11/24; B60C19/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C.    DOCUMENTS CONSIDERED TO BE RELEVANT

| Category* | Citation of document, with indication, where appropriate, of the relevant passages | Relevant to claim No. |
|---|---|---|
| A | JP 2021-037885 A (SOKEN INC, DENSO CORP) 11 March 2021 (2021-03-11) entire text, all drawings | 1-7 |
| A | JP 5-281097 A (MAZDA MOTOR CORP) 29 October 1993 (1993-10-29) entire text, all drawings | 1-7 |
| A | JP 2009-061917 A (BRIDGESTONE CORP) 26 March 2009 (2009-03-26) entire text, all drawings | 1-7 |
| A | WO 2008/072453 A1 (BRIDGESTONE CORP) 19 June 2008 (2008-06-19) entire text, all drawings | 1-7 |

☐ Further documents are listed in the continuation of Box C.      ☑ See patent family annex.

| | |
|---|---|
| \*    Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **29 July 2022** | **09 August 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/022378**

| Patent document cited in search report | | | Publication date (day/month/year) | Patent family member(s) | | | Publication date (day/month/year) |
|---|---|---|---|---|---|---|---|
| JP | 2021-037885 | A | 11 March 2021 | WO | 2021/045051 | A1 | |
| | | | | entire text, all drawings | | | |
| JP | 5-281097 | A | 29 October 1993 | (Family: none) | | | |
| JP | 2009-061917 | A | 26 March 2009 | (Family: none) | | | |
| WO | 2008/072453 | A1 | 19 June 2008 | US | 2010/0060443 | A1 | |
| | | | | entire text, all drawings | | | |
| | | | | EP | 2123487 | A1 | |
| | | | | JP | 2008-143460 | A | |
| | | | | JP | 2008-143459 | A | |

Form PCT/ISA/210 (patent family annex) (January 2015)

**EP 4 332 537 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017156295 A
- JP H11326143 A